# EUROPEAN PATENT SPECIFICATION

(11) **EP 0 384 580 B1**
(45) Date of publication and mention of the grant of the patent: **22.06.1994**
(21) Application number: 90300793.8
(22) Date of filing: 25.01.1990
(51) Int. Cl.: H01R 23/72

(54) **Surface mount HDI contact**
HDI-Kontakt für Oberflächenmontage
Contact HDI pour montage en surface

(30) Priority: 22.02.1989 US 314331
(43) Date of publication of application: 29.08.1990
(73) Proprietor: THE WHITAKER CORPORATION, Wilmington, Delaware 19808 (US)
(72) Inventor: Glover, Douglas Wade, Harrisburg, Pennsylvania 17104 (US); Harner, Donald Richard, Camp Hill, Pennsylvania 17011 (US)
(74) Representative: Warren, Keith Stanley

(56) References cited:
- EP-A- 0 055 042
- EP-A- 0 118 346

## Description

This invention relates to a pin header electrical connector for use in making electrical connections to contact pads arranged in a grid array on an interface surface of a circuit board, for example, and also relates to an electrical contact element for such a connector. The invention specially concerns such a connector, the contact elements of which are provided with contact pins each having opposed flat contact surfaces for engagement by respective contact beams of a twin beam receptacle terminal of a mating electrical connector.

There is described in US-A-4,354,729, an electrical connector comprising an insulating housing in the form of a rectangular annulus, in cavities extending around the periphery of which, are electrical contact elements each comprising a contact arm having a contact pad on an interface surface of an electronic component. The contact arm of each contact element is connected by way of a support arm, to a rectangular cross section electrical pin for soldering into a plated through hole in a printed card, thereby connecting a respective contact pad on the interface surface to a conductor of the card. The pin, and the remainder of the contact element, are uniplanar, each contact element, and consequently opposed flat surfaces of its contact pin extending parallel to one of the X and Y axes of the housing. Such a connector is unsuitable for use where the pads on said interface surface are arranged in a high density grid array comprising, for example, four rows of six contact pads each. Further, once secured to the circuit board, the contact elements can only be removed therefrom after disconnecting the soldered joints between the contact pins and the plating of the holes in the circuit board.

The present invention provides an electrical connector having contact elements, arranged with maximum density in a housing, for engagement with contact pads disposed in a grid array on an interface surface. The connector is matable with a mating electrical connector, having twin beam receptacle terminals for engaging opposed flat contact surfaces of rectangular cross section contact pins projecting from the contact elements. A problem arises because the contact elements need to have relatively long contact springs which are provided with contact noses for engaging the pads and at the same time the contact noses must conform precisely to the grid array. Each opposed flat contact surface of each contact pin must extend parallel to the X or Y axis of the grid array if the pin is to properly mate with a twin beam receptacle terminal of the mating connector, given that the contact surfaces of each contact beam customarily extend parallel to one of said X and Y axes. Thus, if the contact elements were to be uniplanar, then the contact springs thereof would all have to extend parallel to one of the said X and Y axes with a result that the contact elements could not be arranged with maximum density, with their noses in exact conformity with the grid array of the contact pads on said interface surface.

With the present invention, the contact springs are orientated at an angle, for example an angle of 45°, with respect to the X and Y axes of the grid array of the contact noses, while the contact pins are oriented with their contact surfaces parallel with one of those axes.

Accordingly, the present invention consists in a pin header electrical connector according to claim 1, a one-piece electrical contact element according to claim 9 and an electrical connector according to claim 13.

Each contact element may be stamped from a single piece of sheet metal stock, for example brass stock. The contact pin of the contact element is subsequently twisted, for example through 45°, with respect to the remainder of the contact element before assembling the contact element to its housing. The interface surface may be that of a mother circuit board, for a personal computer, for example, the mating connector carrying a row of daughter circuit boards having conductors connected to the terminals of the mating connector.

Each contact pin will usually be of square cross section.

An embodiment of the invention will now be described by way of example with reference to the accompanying drawings, in which:
Figure 1 is a top plan view of a pin header first electrical connector showing a fragment of a second identical electrical connector in modular relationship therewith;
Figure 2 is a side view of said first connector;
Figure 3 is a cross-sectional view taken on the lines 3-3 of Figure 1;
Figure 4 is a cross-sectional view taken on the lines 4-4 of Figure 1;
Figure 5 is a side view of an electrical contact element of said pin header connectors;
Figure 6 is an end view of an electrical socket connector for mating with said pin header first connector;
Figure 7 is a diagrammatic top plan view of a mother circuit board; and
Figure 8 is a fragmentary side view, shown partly in cross section, illustrating the pin header connector assembled to the circuit board.

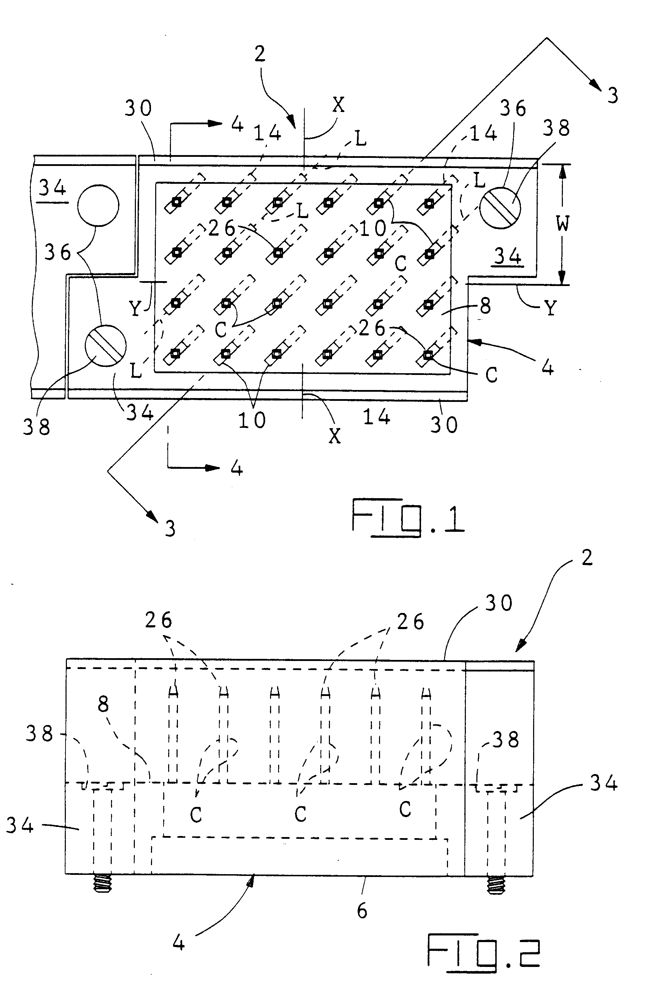

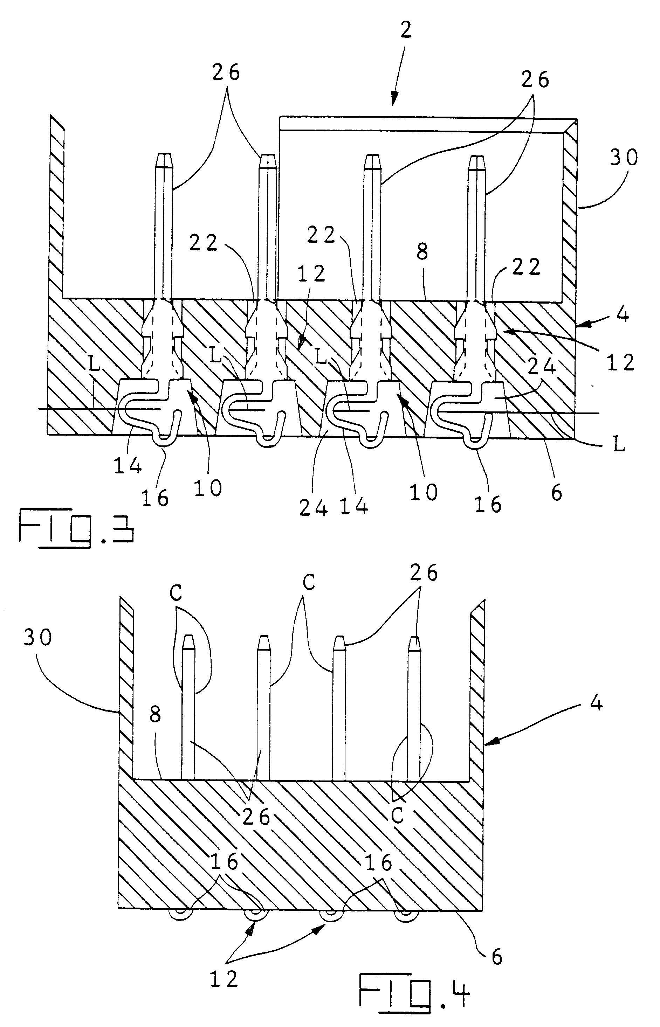

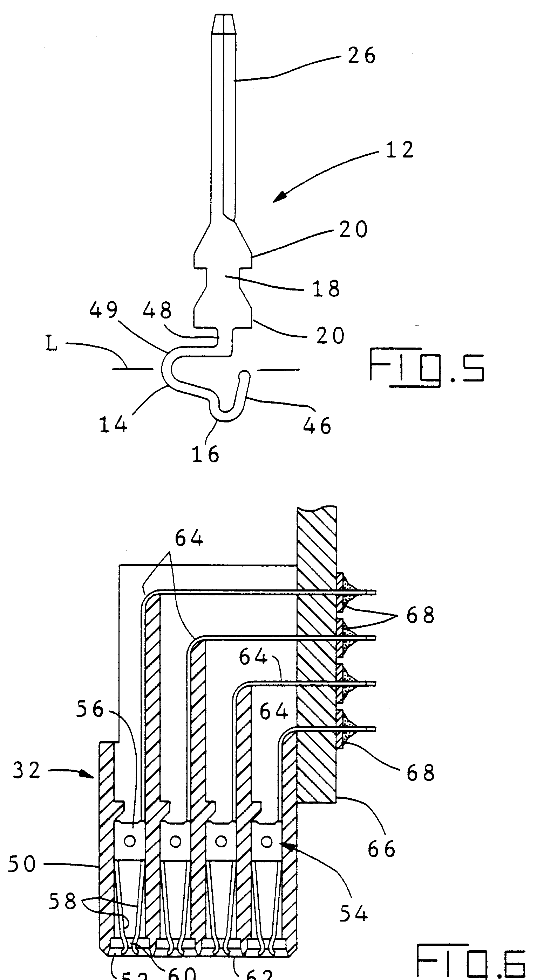

As shown in Figures 1 to 5, a pin header electrical connector 2 comprises an insulating housing 4 having a flat interface surface 6 and a mating face 8 opposite thereto. The housing 4 includes a multiplicity of contact element receiving, slot shaped, through cavities 10 disposed in a rectangular grid array. Each cavity 10 opens into both the interface surface 6 and the mating face 8. A multiplicity of one-piece electrical contact elements 12 are each retained in a respective one of the cavities 10. Each cavity 10 comprises a wider portion 24 opening into the surface 6 and a narrower portion 22 opening into the face 8 and communicating with the cavity portion 24. Each contact element 12 is stamped and formed from sheet metal stock, for example of 0.635 mm (0.025 inches) in thickness, and comprises an elongate contact spring 14 in the cavity portion 24, proximate to the interface surface 6 and having a longitudinal axis L extending parallel to that surface or substantially so. A contact nose 16 is disposed on the contact spring 14 projecting from the interface surface 6. A retention part 18 force fitted into the cavity portion 22 is provided with two pairs of retention barbs 20 spaced from one another longitudinally of the part 18 and biting into the opposite walls of said cavity portion 22. A rectangular cross section, rectilinear contact pin 26 projects from the part 18 outwardly of the mating face 8. The contact spring 14 and the retention part 18 of each contact element 12 are coplanar. The contact element 12 is stamped from the said sheet metal stock, with the contact pin 26 coplanar with the retention part 18 and the contact spring 14. The pin 26 is then twisted about its longitudinal axis, relative to the spring 14 and the part 18, through an angle of 45°. Thus, each contact element 12, presents opposed, flat contact surfaces C angled by 45° with respect to the rest of the contact element. The longitudinal axis of the pin 26 substantially bisects the contact nose 16. As shown in Figure 1, said rectangular grid array has X and Y axes extending normally of each other in the plane of the surface 6. In the interest of maximum contact density, the longitudinal axes L of the contact springs 14, and the parts 18 of the contact elements 12, extend at an angle of 45° with respect to each of the X and Y axes. By virtue, however, of the twisting operation described above, the opposed contact surfaces C of each contact pin 26, lie parallel to the X axis and at right angles to the Y axis, of the grid array.

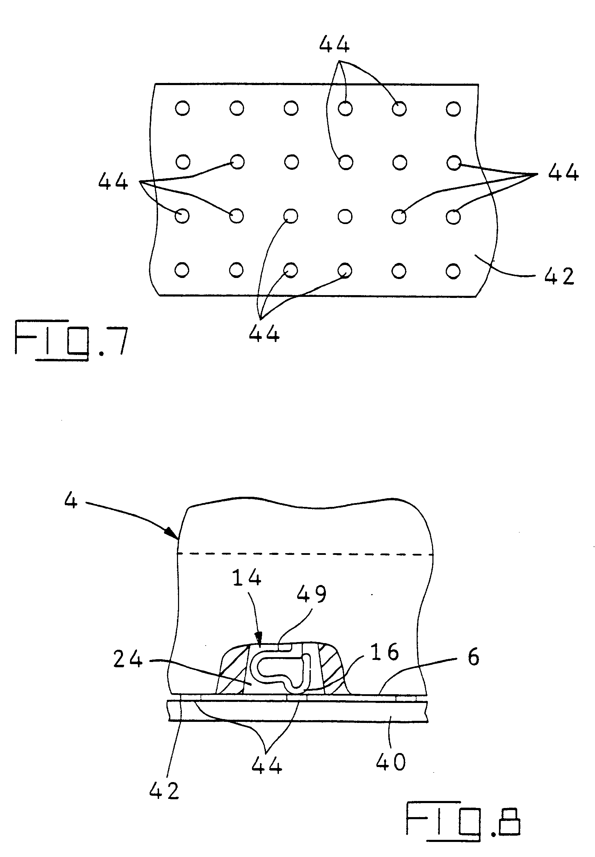

There extend perpendicularly from the mating face 8, shroud walls 30 which serve to protect the contact pins 26 and to receive between them a mating electrical socket connector 32 shown in figure 6. Then the housing 4 is provided at each end thereof with a mounting lug 34, the lug 34 at one end of the housing 4, being offset from the lug 34 at the other end of the housing 4 by a distance equal to the width W of a lug 34. Each lug 34 has an opening 36 for receiving a fastener 38 for securing the connector 2 to a mother printed circuit board 40 (Figures 7 and 8) with the interface surface 6 of the housing 4 facing an interface surface 42 of the board 40. The board 42 has thereon a rectangular grid array of contact pads 44 of the same number and arrangement as the contact noses 16 projecting from the interface surface 6 of the connector 2. When the connector 2 has been secured to the board 40, each nose 16 resiliently engages a respective one of the pads 44 (Figure 8), a contact arm 46 on each nose 16 being thereby forced against a stub 48 connecting a support arm 49 of the contact spring 14 of the element 12 to the retention part 18; thereby providing a shortened electrical path between the nose 16 and the pin 26.

The mating connector 32 will now be described with reference to Figure 6. The connector 32 comprises an insulating housing 50 having therein a rectangular grid array of terminal receiving cavities 52 of the same number and arrangement as the cavities 10 of the housing 4 and the pads 44 of the board 40. Each cavity 52 contains an electrical terminal 54, see Figure 6, having an intermediate body 56 secured in the cavity 52 by detent means, not shown. Projecting from one end of the body 56 are twin contact beams 58 having opposed contact surfaces 60 proximate to a mating face 62 of the housing 50. One end of the cavity 52 opens into the face 62 to receive a respective contact pin 26 of the connector 2. There projects from the other end of the body 56 of each terminal 54, a connector 64 which extends to a daughter printed circuit board 66 and is soldered to at least one printed conductor 68 thereon. The terminals 54 of each row of four terminals of the connector 32 are connected to conductors 68 of a common daughter board 66 as shown in Figure 6.

In order to electrically connect each conductor 68 of the daughter board 66 to a respective contact pad 44 of the mother board 40 when the pin header connector 2 has been secured thereto, as described above,the connector 32 is mated with the connector 2 by inserting it between the shroud walls 30 of the connector 2. The face 62 is leading so that each contact pin 26 enters a respective cavity 52 of the connector 32, to be received between the contact surfaces 60 so that each contact surface 60 engage a respective contact surface C of the respective pin 26. The connector 32 may be any suitable connector that is commercially available.

By virtue of the twisting of each pin 26 through 45°, as described above, each contact surface 60 engages a flat contact surface C of a pin 26. Additionally, the longitudinal axes L of the contact springs 16 are angled by 45° with respect to the X and Y axes of the grid array of cavities 10 for maximum contact element density. The present structure permits the contact surfaces 60 to all extend parallel to one of the X and Y axes of the grid array of terminals 54 as is customary in the industry.

By virtue of the offsetting of the lugs 34 of the connector 2, a plurality of the connectors 2 may be secured to a common mother board 40 in modular relationship as will be apparent from Figure 1. While the connector 2 is shown, in the present example, as having 24 contact elements 12, the present invention may be practiced with more or fewer such elements. Connectors having several hundred such contact elements are common in the industry.

## Claims

1. A pin header electrical connector (2) comprising;
an insulating housing (4) having a flat interface surface (6), a mating face (8) opposite thereto, and a multiplicity of contact element receiving, through cavities (10), each of which opens both into said interface surface (6) and into said mating face (8); and
a one-piece electrical contact element (12) retained in each of said cavities (10) and having an elongate contact spring (14) proximate to said interface surface (6), said contact spring (14) having a longitudinal axis extending substantially parallel to the interface surface (6), a contact nose (16) on said contact spring projecting from said interface surface (6) and a contact pin (26) projecting from said mating face (8), said contact noses (16) being arranged in a grid array having X and Y axes extending normally of each other and intersecting said interface surface (6), said longitudinal axes of said contact springs (14) all extending parallel to each other but being angled with respect to both of said X and Y axes, and each contact pin (26) presenting opposed, flat contact surfaces (c) which are parallel to one of said X and Y axes and extend at right angles to the other of those axes.

2. A connector as claimed in Claim 1, wherein each contact element (12) in each cavity (10) has a retention part (18) from which said contact pin (26) extends and which has been force fitted into said cavity (10) to retain said contact element (12) therein and being coplanar with said contact spring (14) of the contact element (12), said contact pin (26) thereof having been twisted about its own axis with respect to said retention part (18) and said contact spring (14) to align said flat contact surfaces (c) of said pin (26) with one of said X and Y axes.

3. A connector as claimed in Claim 1, wherein said housing (4) defines first and second portions (24,22) of each cavity (10), said first portion (24) containing the contact spring (14) of the respective contact element (12), being proximate to said interface surface (6), and being elongate in a direction parallel thereto and in the direction of said longitudinal axis and said second portion (22) being elongate in a direction at right angles to said interface surface (6) and communicating at one end with said first portion (24), the other end of said second portion (22) opening into said mating face (8).

4. A connector as claimed in Claim 3, wherein said contact spring (14) of said contact element (12) is connected to the contact pin (26) thereof by a retention portion (18) of the contact element (12) which has been force fitted into said second portion (22) of the cavity (10), the contact spring (14) and the retention portion (18) being uniplanar and said contact surfaces (c) of the contact pin (26) being angled with respect to the plane of the contact spring (14) and the retention portion (18).

5. A connector as claimed in claim 1,2,3 or 4, wherein each contact pin (26) is rectilinear, having a longitudinal axis, said contact nose (16) being bisected by the longitudinal axis of the contact pin (26).

6. A connector as claimed in claim 1,2,3 or 4, wherein each contact pin (26) is rectilinear and is of square cross section, two first opposite sides (c) of each contact pin (26) being parallel to one of said X and Y axes and two second opposite sides (c) of said pin (26) being parallel to the other of said X and Y axes.

7. A connector as claimed in any one of the preceding claims wherein said longitudinal axes of all of said contact springs (14) are angled by approximately 45° with respect to each of said X and Y axes.

8. A connector as claimed in any one of the preceding claims wherein said grid array is rectilinear.

9. A one-piece electrical contact element (12) comprising a uniplanar, elongate contact spring (14), a retention part (18) coplanar with said contact spring (14) and having means for retaining the contact element (12) in a cavity (10) in an insulating housing (4), and a contact pin (26) of rectangular cross section projecting from one end of the retention part (18), the contact pin (26) and the retention part (18) having a common longitudinal axis, the contact spring (14) comprising a spring arm connected to the other end of the retention part (18) by means of a support arm (49) extending at right angles to the contact pin (26), a contact nose (16) on the contact spring (14) projecting away from the contact pin (26) in line with said common longitudinal axis, and the contact pin (26) having opposite flat contact surfaces (c) which are angularly displaced from the common plane of the contact spring (14) and the retention part (18), about said common longitudinal axis.

10. A contact element as claimed in Claim 9, wherein said contact surfaces (c) are angularly displaced by approximately 45° with respect to said common plane.

11. A contact element (12) as claimed in claim 9 or 10, wherein said pin (26) is of square cross-section.

12. A contact element (12) as claimed in claim 9, 10 or 11, wherein said pin is twisted about said common axis relative to said retention portion.

13. A pin header electrical connector (2) interposed between a surface of a mother circuit board (40) having thereon a multiplicity of contact pads (44) arranged in a grid array, and an electrical receptacle connector (32) for mating with said pin header connector (2) and being provided with twin beam receptacle terminals (54) also arranged in said grid array, said pin header connector (2) comprising;
an insulating housing (4) having a flat interface surface (6) having X and Y axes extending at right angles to each other in the plane thereof, and a mating face (8) opposite to said interface surface (6);
a multiplicity of parallel contact springs (14) recessed beneath said interface surface (6), and being elongate in a direction parallel thereto, said contact springs (14) being angled with respect to both of said X and Y axes for maximum contact density and having contact noses (16) projecting from said interface surface (6), in said grid array, each for engagement with a respective one of said contact pads (44); and a multiplicity of contact pins (26) each electrically connected to a respective one of said contact springs (14), projecting from said mating face (8) in said grid array, each for mating with a respective twin beam receptacle terminal (54) of said receptacle connector (32), each contact pin (26) having a pair of opposed, flat contact surfaces (c) parallel to one of said X and Y axes, each for engagement by a respective beam contact (58) of said respective twin beam receptacle terminal (54).

14. A connector as claimed in Claim 13, in combination with said pin receptacle connector (2), wherein each twin beam receptacle terminal (54) has a portion (64) secured in electrically conductive relationship to a printed conductor (68) at an edge of a daughter circuit board (66).

## Patentansprüche

1. Elektrischer Stifthalter-Verbinder (2), der verfügt
über ein Isoliergehäuse (4) mit einer flachen Anschlußfläche (6), mit einer dieser gegenüber liegenden Fugefläche (8) und mit einer Vielzahl von Durchgangshohlräumen (10) zur Kontaktelementaufnahme, deren jeder in die Anschlußfläche (6) und in die Fügefläche (8) einmündet, und
über ein einteiliges elektrisches Kontaktelement (12), das in jedem der Hohlräume (10) festgehalten ist und eine längliche Kontaktfeder (14) in der Nähe der Anschlußfläche (6) aufweist, wobei die Kontaktfeder (14) eine Längsachse aufweist, die sich im wesentlichen parallel zur der Anschlußflache (6) erstreckt, eine Kontaktnase (16) an der Kontaktfeder von der Anschlußfläche (6) aus vorsteht und ein Kontaktstift (26) von der Fügefläche (8) aus vorsteht, die Kontaktnasen (16) in einem Gitterfeld angeordnet sind, dessen X- und Y-Achse sich rechtwinklig zueinander erstrecken, und die Anschlußfläche (6) durchdringen, die Längsachsen der Kontaktfedern (14) sich alle parallel zueinander erstrecken, jedoch sowohl zu der X- als auch zu der Y-Achse unter einem Winkel verlaufen und jeder Kontaktstift (26) einander gegenüberliegende, flache Kontaktflächen (c) aufweist, die parallel zu der X- oder der Y-Achse verlaufen und sich rechtwinklig zu der jeweils anderen Achse erstrecken.

2. Verbinder nach Anspruch 1, bei dem jedes Kontaktelement (12) in jedem Hohlraum (10) ein Rückhalteteil (18) aufweist, von dem aus sich der Kontaktstift (26) erstreckt und der im Preßsitz in den Hohlraum (10) eingesetzt ist, um das Kontaktelement (12) dort festzuhalten, und der koplanar zu der Kontaktfeder (14) des Kontaktelements (12) ausgebildet ist, wobei der Kontaktstift (26) um seine eigene Achse gegenüber dem Festhalteteil (18) und der Kontaktfeder (14) verdreht ist, damit die flachen Kontaktflächen (c) des Stifts (26) mit der X- oder der Y-Achse fluchten.

3. Verbinder nach Anspruch 1, bei dem das Gehäuse (4) erste und zweite Bereiche (24, 22) jedes Hohlraums (10) begrenzt, wobei der erste Bereich (24) die Kontaktfeder (14) des jeweiligen Kontaktelements (12) enthält, sich in der Nähe der Anschlußfläche (6) befindet und in einer Richtung parallel hierzu und in der Richtung der Längsachse länglich ist und wobei der zweite Bereich (22) in einer Richtung rechtwinklig zu der Anschlußfläche (6) länglich ist und an einem Ende mit dem ersten Bereich (24) in Verbindung steht, während das andere Ende des zweiten Bereichs (22) in die Fugefläche (8) einmündet.

4. Verbinder nach Anspruch 3, bei dem die Kontaktfeder (14) des Kontaktelements (12) mit dessen Kontaktstift (26) mittels eines Festhalteteils (18) des Kontaktelements (12) in Verbindung steht, der im Preßsitz in den zweiten Bereich (22) des Hohlraums (10) eingesetzt ist, wobei die Kontaktfeder (14) und der Festhalteteil (18) uniplanar ausgebildet sind und die Kontaktflächen (c) des Kontaktstifts (26) gegenüber der Ebene der Kontaktfeder (14) und des Festhalteteils (18) abgewinkelt sind.

5. Verbinder nach Anspruch 1,2, 3 oder 4, bei dem jeder Kontaktstift (26) geradlinig ist und eine Längsachse aufweist, wobei die Kontaktnase (16) von der Längsachse des Kontaktstifts (26) halbiert ist.

6. Verbinder nach Anspruch 1,2, 3 oder 4, bei dem jeder Kontaktstift (26) geradlinig ist und einen quadratischen Querschnitt aufweist, wobei zwei erste einander gegenüberliegende Seiten (c) jedes Kontaktstifts (26) parallel zu der X- oder der Y-Achse verlaufen und zwei zweite einander gegenüberliegende Seiten (c) des Kontaktstifts (26) parallel zu der jeweils anderen Achse der X- und der Y-Achsen verlaufen.

7. Verbinder nach mindestens einem der vorhergehenden Ansprüche, bei dem die Längsachsen aller Kontaktfedern (14) um etwa 45° gegenüber sowohl der X-als auch der Y-Achse abgewinkelt sind.

8. Verbinder nach mindestens einem der vorhergehenden Ansprüche, bei dem das Gitterfeld geradlinig ist.

9. Einteiliges elektrisches Kontaktelement (12), das verfügt über eine uniplanare, längliche Kontaktfeder (14), ein zu der Kontaktfeder (14) koplanares Festhalteteil (18), das Mittel zum Festhalten des Kontaktelements (12) in einem Hohlraum (10) in einem Isoliergehäuse (4) aufweist, und über einen Kontaktstift (26) rechteckigen Querschnitts, der von einem Ende des Festhalteteils (18) aus vorsteht, wobei der Kontaktstift (26) und das Festhalteteil (18) eine gemeinsame Längsachse aufweisen, die Kontaktfeder (14) einen Federarm aufweist, der mit dem anderen Ende des Festhalteteils (18) mittels eines Stützarms (49) in Verbindung steht, der sich rechtwinklig zu dem Kontaktstift (26) erstreckt, wobei eine Kontaktnase (16) an der Kontaktfeder (14) von dem Kontaktstift (26) aus in einer Linie mit der gemeinsamen Längsachse vorsteht und der Kontaktstift (26) einander gegenüberliegende, flache Kontaktflächen (c) aufeist, die aus der gemeinsamen Ebene der Kontaktfeder (14) und des Festhalteteils (18) in Winkelrichtung um die gemeinsame Längsachse verschoben sind.

10. Kontaktelement nach Anspruch 9, bei dem die Kontaktflächen (c) um etwa 45° gegenüber der gemeinsamen Ebene in Winkelrichtung verschoben sind.

11. Kontaktelement (12) nach Anspruch 9 oder 10, bei dem der Stift (26) einen quadratischen Querschnitt aufweist.

12. Kontaktelement (12) nach Anspruch 9, 10 oder 11, bei dem der Stift um die gemeinsame Achse gegenüber dem Festhaltebereich verdreht ist.

13. Elektrischer Stifthalter-Verbinder (2), der zwischen einer Fläche einer Mutter-Leiterplatte (40) mit einer daran vorgesehenen Vielzahl von Kontaktflächenteilen (44), die in einem Gitterfeld angeordnet sind, und einem elektrischen Aufnahmeverbinder (32) zum Zusammenfügen mit dem Stifthalter-Verbinder (2) angeordnet und mit Doppelarm-Aufnahmeanschlüssen (54) ausgestattet ist, die ebenfalls in dem Gitterfeld angeordnet sind, wobei der Stifthalter-Verbinder (2) verfügt
über ein Isoliergehäuse (4) mit einer flachen Anschlußfläche (6), deren X- und Y-Achsen sich rechtwinklig zueinander in der Ebene desselben erstrecken, und über eine Fügefläche (8), die der Anschlußfläche (6) gegenüber liegt,
über eine Vielzahl von Kontaktfedern (14), die unter der Anschlußfläche (6) ausgenommen sind und die in einer Richtung parallel hierzu länglich sind, wobei die Kontaktfedern (14) sowohl zu der X- als auch der Y-Achse für eine maximale Kontaktdichte abgewinkelt sind und Kontaktnasen (16) aufweisen, die von der Anschlußfläche (6) aus in dem Gitterfeld vorstehen, je zur Berührung mit einem jeweiligen Kontaktflächenteil (44), und über eine Vielzahl von Kontaktstiften (26), die mit einer jeweiligen Kontaktfeder (14) elektrisch in Verbindung stehen, von der Fügefläche (8) aus in dem Gitterfeld vorstehen, je zum Zusammenfügen mit einem jeweiligen Doppelarm-Aufnahmeanschluß (54) des Aufnahmeverbinders (32), wobei jeder Kontaktstift (26) ein Paar einander gegenüberliegender, flacher Kontaktflächen (c) aufweist, die parallel zu der X- oder der Y-Achse vertaufen, je zur Berührung durch einen jeweiligen Armkontakt (58) des jeweiligen Doppelarm-Aufnahmeanschlusses (54).

14. Verbinder nach Anspruch 13, in Kombination mit dem Stiftaufnahmeverbinder (2), wobei jeder Doppelarm-Aufnahmeanschluß (54) einen Bereich (64) aufweist, der in einer elektrisch leitfähigen Beziehung an einem gedruckten Leiter (68) an einem Rand einer Tochter-Leiterplatte (66) befestigt ist.

## Revendications

1. Connecteur électrique (2) à embase à broches comportant :
un boîtier isolant (4) ayant une surface plate (6) d'interface, une face (8) d'accouplement qui lui est opposée et une multiplicité de cavités traversantes (10) de réception d'éléments de contact s'ouvrant chacune à la fois dans ladite surface (6) d'interface et dans ladite face (8) d'accouplement ; et
un élément de contact électrique (12) d'une seule pièce retenu dans chacune desdites cavités (10) et ayant un ressort de contact allongé (14) proche de ladite surface (6) d'interface, ledit ressort (14) de contact ayant un axe longitudinal s'étendant sensiblement parallèlement à la surface d'interface (6), un nez (16) de contact sur ledit ressort de contact faisant saillie de ladite surface (6) d'interface et une broche (26) de contact faisant saillie de ladite face (8) d'accouplement, lesdits nez (16) de contact étant agencés en un réseau quadrillé ayant des axes X et Y s'étendant perpendiculairement entre eux et intersectant ladite surface (6) d'interface, lesdits axes longitudinaux desdits ressorts (14) de contact s'étendant tous parallèlement entre eux, mais étant inclinés par rapport auxdits axes X et Y, et chaque broche (26) de contact présentant des surfaces opposées et plates (C) de contact qui sont parallèles à l'un desdits axes X et Y et qui s'étendent à angle droit avec l'autre de ces axes.

2. Connecteur selon la revendication 1, dans lequel chaque élément de contact (12) dans chaque cavité (10) comporte une partie (18) de retenue de laquelle ladite broche (26) de contact s'étend et qui a été ajustée à force dans ladite cavité (10) pour y retenir ledit élément (12) de contact et étant coplanaire avec ledit ressort (14) de contact de l'élément (12) de contact, ladite broche (26) de contact de celui-ci ayant été torsadée autour de son propre axe par rapport à ladite partie (18) de retenue et audit ressort (14) de contact pour aligner lesdites surfaces plates (c) de contact de ladite broche (26) avec l'un desdits axes X et Y.

3. Connecteur selon la revendication 1, dans lequel ledit boîtier (4) définit des première et seconde parties (24, 22) de chaque cavité (10), ladite première partie (24) contenant le ressort (14) de contact de l'élément de contact respectif (12), étant proche de ladite surface d'interface (6) et étant allongée dans une direction qui lui est parallèle et dans la direction dudit axe longitudinal et ladite seconde partie (22) étant allongée dans une direction à angle droit avec ladite surface (6) d'interface et communiquant par une extrémité avec ladite première partie (24), l'autre extrémité de ladite seconde partie (22) s'ouvrant dans ladite face (8) d'accouplement.

4. Connecteur selon la revendication 3, dans lequel ledit ressort (14) de contact dudit élément (12) de contact est relié à la broche (26) de contact de celui-ci par une partie (18) de retenue de l'élément (12) de contact qui a été ajustée à force dans ladite seconde partie (22) de la cavité (10), le ressort (14) de contact et la partie (18) de retenue étant dans un seul plan et lesdites surfaces (c) de contact de la broche (26) de contact étant inclinées par rapport au plan du ressort (14) de contact et de la partie (18) de retenue.

5. Connecteur selon la revendication 1, 2, 3 ou 4, dans lequel chaque broche (26) de contact est rectiligne, ayant un axe longitudinal, l'axe longitudinal de la broche (26) de contact formant une bissectrice dudit nez (16) de contact.

6. Connecteur selon la revendication 1, 2, 3 ou 4, dans lequel chaque broche (26) de contact est rectiligne et est de section transversale carrée, deux premiers côtés opposés (c) de chaque broche (26) de contact étant parallèles à l'un desdits axes X et Y et deux seconds côtés opposés (c) de ladite broche (26) étant parallèles à l'autre desdits axes X et Y.

7. Connecteur selon l'une quelconque des revendications précédentes, dans lequel lesdits axes longitudinaux de la totalité desdits ressorts (14) de contact sont inclinés d'environ 45° par rapport à chacun desdits axes X et Y.

8. Connecteur selon l'une quelconque des revendications précédentes, dans lequel ledit réseau quadrillé est rectiligne.

9. Elément de contact électrique (12) d'une seule pièce comportant un ressort de contact allongé (14) dans un seul plan, une partie (18) de retenue coplanaire avec ledit ressort (14) de contact et ayant des moyens pour retenir l'élément (12) de contact dans une cavité (10) du boîtier isolant (4), et une broche (26) de contact de section transversale rectangulaire faisant saillie d'une extrémité de la partie (18) de retenue, la broche (26) de contact et la partie (18) de retenue ayant un axe longitudinal commun, le ressort (14) de contact comportant un bras de ressort relié à l'autre extrémité de la partie (18) de retenue au moyen d'un bras (49) de support s'étendant à angle droit avec la broche (26) de contact, un nez (16) de contact sur le ressort (14) de contact faisant saillie à l'écart de la broche (26) de contact en alignement avec ledit axe longitudinal commun, et la broche (26) de contact ayant des surfaces plates opposées (c) de contact qui sont décalées angulairement du plan commun du ressort (14) de contact et de la partie (18) de retenue, autour dudit axe longitudinal commun.

10. Elément de contact selon la revendication 9, dans lequel lesdites surfaces (c) de contact sont décalées angulairement d'environ 45° par rapport audit plan commun.

11. Elément (12) de contact selon la revendication 9 ou 10, dans lequel ladite broche (26) est de section transversale carrée.

12. Elément (12) de contact selon la revendication 9, 10 ou 11, dans lequel ladite broche est torsadée autour dudit axe commun par rapport à ladite partie de retenue.

13. Connecteur électrique (2) à embase à broches interposé entre une surface d'une plaquette-mère (40) à circuits portant une multiplicité de plots (44) de contact agencés en un réseau quadrillé, et un connecteur femelle électrique (32) destiné à s'accoupler avec ledit connecteur (2) à embase à broches et pourvu de bornes femelles (54) à lames doubles également agencées dans ledit réseau quadrillé, ledit connecteur (2) à embase à broches comportant :
un boîtier isolant (4) présentant une surface plate (6) d'interface ayant des axes X et Y s'étendant à angle droit l'un avec l'autre dans son plan, et une face (8) d'accouplement opposée à ladite surface (6) d'interface ;
une multiplicité de ressorts parallèles (14) de contact en retrait au-dessous de ladite surface (6) d'interface et allongés dans une direction gui lui est parallèle, lesdits ressorts (14) de contact étant inclinés par rapport auxdits axes X et Y pour une densité maximale de contacts et ayant des nez (16) de contact faisant saillie de ladite surface (6) d'interface, dans ledit réseau quadrillé, chacun pour engager l'un, respectif, desdits plots (44) de contact ; et
une multiplicité de broches (26) de contact connectées chacune électriquement à l'un, respectif, desdits ressorts (14) de contact, faisant saillie de ladite face (8) d'accouplement dans ledit réseau quadrillé, chacune pour s'accoupler avec une borne femelle respective (54) à lame double du connecteur femelle (32), chaque broche (26) de contact présentant une paire de surfaces plates et opposées (c) de contact parallèles à l'un desdits axes X et Y, destinées chacune à être engagées par un contact à lame respectif (58) de ladite borne femelle respective (54) à lame double.

14. Connecteur selon la revendication 13, en combinaison avec ledit connecteur femelle (2) à broches, dans lequel chaque borne femelle (54) à lame double comporte une partie (64) assujettie en relation électriquement conductrice par un conducteur imprimé (68) à un bord d'une plaquettefille (66) à circuit.
